# EUROPEAN PATENT APPLICATION

(11) **EP 2 003 106 A2**
(43) Veröffentlichungstag der Anmeldung: **17.12.2008**
(21) Anmeldenummer: 06790446.6
(22) Anmeldetag: 17.05.2006
(51) Int. Cl.: C07C 7/12, C07C 13/28

(54) **VERFAHREN ZUR HERSTELLUNG EINES DEAROMATISIERTEN FARBLOSEN ÖLS AUS NAPHTHALANÖL**

(30) Priorität: 17.03.2006 AZ
(71) Anmelder: Mirzayev, Mushfig, 1006 Baku (AZ); Aghayev Adil, Mustafa Oglu, 1010 Baku (AZ)
(72) Erfinder: Mirzayev, Mushfig, 1006 Baku (AZ); Aghayev Adil, Mustafa Oglu, 1010 Baku (AZ)
(74) Vertreter: Fleck, Hermann-Josef
(86) Internationale Anmeldenummer: PCT/AZ2006/000001
(87) Internationale Veröffentlichungsnummer: WO 2007/106954

(57) **Zusammenfassung**

Die Erfindung betrifft ein Verfahren zur Gewinnung eines dearomatisierten farblosen Öls aus Naphthalan-Öl mittels Adsorption des Naphthalan-Öls über ein Kieselgel mit nachfolgender portionsweisen Desorption unter Einsatz von einem leichten Lösungsmittel bei der Umgebungstemperatur. Die Mischung eines teerfreien Naphthalan-Öls und eines Lösungsmittels wird von unten in eine Adsorptionssäule mit einer Volumengeschwindigkeit von 0,5 St⁻¹ zugeführt, wobei das Verhältnis in der Mischung 1:1,5 bis 2,5 beträgt und die Mischung bis zur vollständigen Sättigung des Adsorptionsmittels befördert wird. Anschließend wird eine portionsweise Desorption anhand des reinen Lösungsmittels durchgeführt, wobei die Menge des Lösungsmittels der Menge der Bestandkomponente des teerfreien Ausgangsprodukts proportional ist.

## Beschreibung

Die Erfindung betrifft ein Verfahren zur Gewinnung eines dearomatisierten farblosen Öls nach dem Oberbegriff des Anspruchs 1. Das Verfahren bildet die Grundlage für die Herstellung von Arzneimitteln.

Die chemische Zusammensetzung des Naphthalan-Öls ist äußerst kompliziert. Das Vorhandensein von wertvollen polyzyklischen Stoffen wie Phenatren-naphthenische Kohlenwasserstoffe, ist von großem Interesse im Zusammenhang mit der Verwendung des Naphthalan-Öls als Grundstoff bei der Aufbereitung von Salben, Applikationen, gynäkologischen und Rektalzäpfchen usw.

Es ist ein Adsorptionsverfahren zur Gewinnung von Isoparaffin- und naphthenischen Kohlenwasserstoffen aus Naphthalan-Öl bekannt. Dies erfolgt mittels Adsorptionsbehandlung des Naphthalan-Öls in einer Benzinlösung nach dem Kontaktverfahren unter Nutzung von einem Alumosilikat-Adsorptionsmittel. [1]

Der Mangel des bekannten Verfahrens besteht darin, dass die oben erwähnten abgeschiedenen Kohlenwasserstoffe eine weitere Trennung erfordern.

Das dem technischen Wesen und dem erreichbaren Ergebnis nach am nächsten liegende Verfahren ist ein Adsorptionsverfahren, welches auf der selektiven Aussonderung der Gruppe von Kohlenwasserstoffen aus dem Destillat des Naphthalan-Öls beruht. Das Verfahren setzt den Einsatz von Kieselgel und einem Lösungsmittel in einer Adsorptionssäule voraus. Die Säulenhöhe beträgt 2,5 - 3,5 m, und der Durchmesser der Säule beträgt 30 bis 35 mm. Die Korngröße des Kieselgels ist kleiner als 150 Maschen. Als Lösungsmittel werden Methan- Kohlenwasserstoffe wie Isopentan, Heptan, Isooktan usw. eingesetzt.

Das Lösungsmittel in der Mischung mit dem Destillat des Naphthalan-Öls wird dem oberen Teil der Säule zugeführt. Danach wird das reine Lösungsmittel portionsweise je 100 ml bei jedem Durchlauf der Säule von oben zugeführt.

Das Lösungsmittel wird solange zugeführt, bis das reine Lösungsmittel anfängt, aus dem unteren Teil der Säule herauszulaufen. Anschließend wird aus jeder gewonnenen Portion das Lösungsmittel abdestilliert. [2]

Der Mangel dieses bekannten Verfahrens besteht darin, dass als Einsatzmaterial das Destillat des Naphthalan-Öls benutzt wird. Beim Abscheidungsvorgang stellt es die Gewinnung aller nutzbringenden Stoffe nicht im vollen Umfang sicher, welche in der Zusammensetzung des nativen Naphthalan-Öls enthalten sind.

Es ist Aufgabe der Erfindung, die selektive Gewinnung von polyzyklischen naphthenischen Kohlenwasserstoffen des Naphthalan-Öls im vollen Umfang durchzuführen.

Die gestellte Aufgabe wird nach der Erfindung durch die Merkmale des Anspruches 1 gelöst. Weitere zweckmäßige und vorteilhafte Maßnahmen der Erfindung gehen aus den Unteransprüchen hervor.

Das dearomatisierte farblose Öl wird aus dem Naphthalan-Öl mittels Adsorption des Naphthalan-Öls über dem Kieselgel gewonnen. Dabei wird nach der Adsorption die portionsweise Desorption unter Einsatz von einem leichten Lösungsmittel bei der Umgebungstemperatur vorgenommen. Während der Desorption wird in die Säule von unten eine Mischung mit einer Volumengeschwindigkeit von 0,5 St⁻¹ gefördert. Die Mischung stellt das teerfreie Naphthalan-Öl mit einem Lösungsmittel im Verhältnis von 1:1,5 bis 2,5 dar. Der Vorgang dauert bis zur vollen Sättigung des Adsorptionsmittels. Anschließend erfolgt die portionsweise Desorption mit einem reinen Lösungsmittel. Die Menge dieses Lösungsmittels ist der Menge der Komponenten des teerfreien Einsatzproduktes proportional.

Das Wesen des neuen Verfahrens besteht im Folgenden: Die portionsweise Zuführung des reinen Lösungsmittels von unten in die Säule ermöglicht es, die Komponenten des teerfreien Naphthalan-Öls im vollen Umfang selektiv auszuscheiden. Dabei muss die Menge des reinen Lösungsmittels der Menge dieser Komponenten proportional sein.

Es gibt Angaben über die Gewinnung von mineralischen Weißölen mittels Desorption unter Einsatz eines Lösungsmittels auf der Oberfläche von Kieselgel. In diesem Fall wird bei der tiefen Desorption von der Oberfläche des Adsorptionsmittels neben den wertvollen polyzyklischen Naphtenen notgedrungen auch Naphtenen gewonnen, welche mit aromatischen Kernen vermischt sind. Bei der leichten Desorption dagegen werden die polyzyklischen Naphtenen nicht vollständig gewonnen. Deswegen dominieren Isoparaffin, Mono- und biziklische naphthenische Kohlenwasserstoffe in der Zusammensetzung des Produktes. Diese dienen aber als Ballast. Dieses Verfahren offenbart einen Ablauf (eine Reihenfolge), welcher das neue Verfahren selbst mehr akzeptabel macht, um einen reinen Grundstoff für Arzneimittel zu bekommen. Dieses Verfahren erfolgt auch in der Kombination mit der Verringerung an dem Verbrauch von teuren Lösungsmitteln, in Übereinstimmung mit den Komponenten des teerfreien Naphthalan-Öls. Die Desorption wird nach einem bekannten Schema vorgenommen: Paraffin- > monozyklische Naphtene > polyzyklische Naphtene > gemischte Naphtene - aromatische Stoffe > aromatische Stoffe > Teere.

Die bekannten Verfahren der Adsorptionsreinigung werden meistens mittels Zuführung des zu forschenden Rohstoffs von oben in die Säule durchgeführt. Jedoch ist dieses Verfahren für die Feinreinigung nicht ausreichend Das liegt daran, dass der Fluss des Rohmaterials unter seinem eigenen Gewicht nach unten strebt. Deswegen hat es nicht genug Zeit, um den gesamten Umfang des Adsorptionsmittels zu bedecken. Dadurch ist es nicht möglich, eine komplette Sorption der Bestandkomponente sicherzustellen. Das gleiche gilt auch für den Desorptionsablauf.

Die Zuführung des zu forschenden Produktes von unten in die Säule umfasst das gesamte Volumen des Adsorptionsmittels, weil der Rohmaterialfluss zwangsweise nach oben steigt. Dabei werden die schwersten Komponenten, d. h. die Teere und die aromatischen Bestandstoffe in den Poren des Adsorptionsmittels zurückgehalten und die leichten Naphten- und Isoparaffinstoffe werden nach oben verdrängt.

Die Wahl der Volumengeschwindigkeit von 0,5 Sr⁻¹ ist dadurch bedingt, dass bei einer höheren Geschwindigkeit der Zuführung keine komplette Sorption und Desorption der Bestandkomponenten des Einsatzmaterials erreicht wird. Bei einer Zuführungsgeschwindigkeit von unter 0.5 St⁻¹ fällt die Leistung des gesamten Vorgangs ab.

Wenn das Verhältnis zwischen dem teerfreien Naphthalan-Öl zum Lösungsmittel nicht eingehalten wird, kommt Folgendes zustande: Wenn der Lösungsmittelanteil reduziert wird (unter 1,5 liegt), so wird die Gewinnungsvollständigkeit der wertvollen Produkte verringert und damit lässt auch die Qualität des Endprodukts nach. Die Vergrößerung des Lösungsmittelanteils führt zu seinem unnötigen Mehrverbrauch.

Es ist Aufgabe der Erfindung, ein Verfahren zur Gewinnung eines dearomatisierten farblosen Öls aus Naphtalan-Öl zu schaffen, bei dem die Gewinnungsvollständigkeit des Endprodukts mit verbesserter Qualität erreicht wird.

Die gestellte Aufgabe wird durch die Merkmale des Anspruchs 1 gelöst.

Weitere zweckmäßige und vorteilhafte Maßnahmen der Erfindung gehen aus den Unteransprüchen hervor.

Um den ganzen Vorgang zu realisieren, wird Kieselgel "ACK" mit einer Benzol-Wirksamkeit von 60 % und einer Korngröße von mindestens 200 Maschen benutzt. Das Kieselgel wird vor dem Gebrauch bei 140 °C im Laufe von 6 Stunden getrocknet.

Die Adsorptionssäule weist einen Durchmesser von 3,0 cm und eine Höhe von 60 cm auf. Der Füllgrad beträgt 80 %.

Die Menge des Adsorptionsmittels ist um das 6-fache größer als das Gewicht des Einsatzmaterials. Als Lösungsmittel wird Hexan oder Heptan benutzt.

### Das native Naphthalan-Öl wird nach dem bekannten Verfahren entharzt. [3]

Das teerfreie Naphthalan-Öl wird zusammen mit dem Lösungsmittel innerhalb des angesagten Bereichs im Verhältnis von 1:1,5 bis 2,5 über eine Dosiereinrichtung in den unteren Teil der Säule befördert. Die Säule wurde vorher mit einem getrockneten Kieselgel gefüllt. Die Beförderung erfolgt mit einer Geschwindigkeit von 0,5 St.⁻¹ und dauert bis zur vollen Sättigung der Oberfläche des Adsorptionsmittels. Danach wird das reine Lösungsmittel portionsweise dem unteren Teil der Säule zugeführt. Die Menge des Lösungsmittels ist der Menge der Bestandkomponente der Kohlenwasserstoffgruppe des teerfreien Ausgangs-Naphthalan-Öls proportional. Am oberen Auslauf werden die ausströmenden Fraktionen über einen Anschluss separat gesammelt. Der Vorgang erfolgt solange, bis alle zu adsorbierenden Kohlenwasserstoffe vollständig gewonnen sind. Als Ende des Vorgangs gilt der Austritt des reinen Lösungsmittels.

Danach wird das Lösungsmittel aus jeder Portion ausgeschieden. Das verbrauchte Kieselgel wird in einer Einrichtung (Sosklet-Typ) aufgefrischt. Dafür wird es mit Methyläthylketon und dann mit Azeton gewaschen, getrocknet und wieder in die Adsorptionssäule gefüllt.

Der Betrieb innerhalb des angemeldeten Bereichs ist in Tabelle 1 zusammengefasst. Hier wurde das Beispiel 1 unter dem angemeldeten Limit genommen und die Beispiele 2 bis 4 stimmen mit dem neuen Verfahren überein.

Tabelle 2 enthält die Angaben der physikalischchemischen Analyse der gewonnenen Fraktionen. Aus den gewonnenen Fraktionen des Naphthalan-Öls werden polyzyklische naphthenische Kohlenwasserstoffe ausgesondert und vereinigt. Diese Kohlenwasserstoffe stellen ein farbloses Öl dar. Dieses Öl besteht ausschließlich aus polyzyklischen Naphtene des Naphthalan-Öls, welche ein Grundstoff für Arzneimittel sind.

Um das Vorhandensein von alkyl-aromatischen Stoffen im gewonnenen Produkt nachzuweisen, wurden folgende Analysen vorgenommen: IR- und UV-Spektroskopie sowohl des Einsatzmaterials als auch des Endproduktes. Laut Angaben wurden die IR-Spektren anhand des Spektrometers IK-20 ermittelt. Das Vorhandensein von Streifen, welche den aromatischen Kohlenwasserstoffen im Ausgangsprodukt entsprechen, ließ sich im Bereich von 1612-1650 cm⁻¹ und 3030- 3080 cm⁻¹ nachweisen, was den Benzol-, Naphten-, Anthrazen- und anderen Kernen entspricht. Beim Endprodukt ist die Intensität dieser Streifen sehr gering und zeigt sich nur spurenweise.

Das neue Verfahren ist einfach. Es ermöglicht, die aktiven polyzyklischen naphthenischen Kohlenwasserstoffe im vollen Umfang auszuscheiden.

### Stand der Technik

[1] Autorreferat zur Dissertation «Forschung der chemischen Zusammensetzung des pharmazeutischen Naphthalan-Öls» Muradova A.N., 1979. Seite 13
[2] "Ölwirtschaft", 1947.
[3] Autorreferat zur Dissertation «Forschung der chemischen Zusammensetzung des pharmazeutischen Naphthalan-Öls» Muradova A.N., 1979. Seite 22

**Tabelle 1**

| T L.Nr. | Kennwerte | Beispiele | | | |
|---|---|---|---|---|---|
| | | 1 | 2 | 3 | 4 |
| 1 | Verhältnis Einsatzmaterial : Lösungsmittel | 1:1 | 1:1,5 | 1:2 | 1:2,5 |
| 2 | Kennwerte der gewonnenen Naphten-Fraktion: | | | | |
| | a) Säurezahl, mg KOH (eine mir unbekannte Abkürzung) pro 1 g des Produkts, max. | 0,05 | 0,03 | 0,01 | 0,01 |
| | b) Refraktionsfaktor n_{d}²⁰, | 1,4875 | 1,4846 | 1,4847 | 1,4847 |
| | c) Kohlenwasserstoffgehalt, | | | | |
| | - Isoparaffin- | 0,6 | 0,2 | 0 | 0 |
| | - Naphten- | 97,9 | 99,8 | 100 | 100 |
| | - gemischte (Naphten-aromatische) | 1,3 | 0 | 0 | 0 |
| | - aromatische | 0,2 | 0 | 0 | 0 |
| | d) Flammpunkt im geschlossenen Tiegel, °C, mindestens | 144 | 142 | 140 | 140 |

**Tabelle 2**

| Fraktionen Ergebnisse | 1 | 2^{x} | 3^{xx} | 4 | 5 | 6 | 7 (Abstreif- teere) |
|---|---|---|---|---|---|---|---|
| | | | | | | | |
| 1. Ausbeute der Fraktion gegenüber Ausgangsprodukt, % | 1,8 | 25 | 35 | 12 | 10 | 8 | 8 |
| 2. Spezifisches Gewicht | 0,8790 | 0,8900 | 0,8960 | 0,9240 | 0,9460 | 0,9860 | 1,0054 |
| 3. Refraktionsfaktor, n_{d}²⁰ | 1,4750 | 1,4830 | 1,4800 | 1,4960 | 1,5106 | 1,5490 | 1,5710 |
| 4. Kinematische Viskosität: bei 50 °C; | 21,4 | 22,1 | 23,9 | 25,0 | 33,8 | 51,15 | - |
| bei 100 °C; | 5,16 | 5,13 | 5,18 | 5,24 | 6,01 | 7,12 | - |
| Viskositätsindex | 84 | 69 | 46 | 36 | 8,0 | -45 | - |
| 5. Kohlenwasserstoffgehalt, % Gew. | | | | | | | |
| - Isoparaffin | 95 | 0 | 0 | 0 | 0 | 0 | 0 |
| - monozyklische Naphtene | 5 | 32 | 0 | 0 | 0 | 0 | 0 |
| - polyzyklische Naphtene | 0 | 78 | 100 | 5 | 0 | 0 | 0 |
| - gemischte (Naphten-aromatische) | 0 | 0 | 0 | 35 | 18 | 0 | 0 |
| - aromatische | 0 | 0 | 0 | 60 | 72 | 100 | 100 |

| | | | | | | | |
|---|---|---|---|---|---|---|---|
| x - Mischung von monozyklischen und polyzyklischen Kohlenwasserstoffen; xx - polyzyklische naphthenische Kohlenwasserstoffe, vorwiegend 3, 4, 5- zyklische | | | | | | | |

## Patentansprüche

1. Verfahren zur Gewinnung eines dearomatisierten farblosen Öls aus Naphthalan-Öl mittels Adsorption des Naphthalan-Öls über ein Kieselgel mit nachfolgender portionsweisen Desorption unter Einsatz von einem leichten Lösungsmittel bei der Umgebungstemperatur,
**dadurch gekennzeichnet,**
**dass** die Mischung eines teerfreien Naphthalan-Öls und eines Lösungsmittels von unten in eine Adsorptionssäule mit einer Volumengeschwindigkeit von 0,5 St⁻¹ zugeführt wird, wobei das Verhältnis in der Mischung 1:1,5 bis 2,5 beträgt und die Mischung bis zur vollständigen Sättigung des Adsorptionsmittels befördert wird,
**dass** anschließend eine portionsweise Desorption anhand des reinen Lösungsmittels durchgeführt wird, wobei die Menge des Lösungsmittels der Menge der Bestandkomponente des teerfreien Ausgangsprodukts proportional ist.

2. Verfahren nach Anspruch 1,
**dadurch gekennzeichnet,**
**dass** eine Adsorptionssäule mit einem Durchmesser von 3,0 cm und einer Höhe von 60 cm bei einem Füllgrad von 80 % verwendet wird und
**dass** als Lösungsmittel Hexan oder Heplan eingesetzt wird.

3. Verfahren nach Anspruch 1,
**dadurch gekennzeichnet,**
**dass** als Einsatzmaterial Kieselgel "ACK" mit einer Benzol-Wirksamkeit von 60 % und einer Korngröße von mindestens 200 Maschen verwendet wird und
**dass** die Menge des Adsorptionsmittels mindestens das 6-fache des Gewichtes des Einsatzmaterials gewählt wird.

4. Verfahren nach Anspruch 1,
**dadurch gekennzeichnet,**
**dass** das teerfreie Naphtalen-Öl zusammen mit dem Lösungsmittel im Verhältnis 1:1,5 bis 2,5 über eine Dosiereinrichtung in den unteren Teil der Adsorptionssäule befördert wird,
**dass** die mit getrocknetem Kieselgel gefüllte Adsorptionssäule wird mit einer Geschwindigkeit von 0,5 St.⁻¹ bis zur vollen Sättigung der Oberfläche des Adsorptionsmittels vom unteren Teil der Adsorptionssäule aus beschickt,
**dass** danach dem unteren Teil der Adsorptionssäule reines Lösungsmittel zugeführt wird,
**dass** die Menge des Lösungsmittels der Menge der Bestandkomponenten der Kohlenwasserstoffgruppe des teerfreien Ausgangs-Naphthalan-Öls proportional gewählt wird,
**dass** am oberen Auslauf der Adsorptionssäule die ausströmenden Fraktionen separat gesammelt werden und
**dass** der Vorgang solange durchgeführt wird, bis alle zu adsorbierenden Kohlenwasserstoffe vollständig gesammelt sind und das Ende des Vorgangs durch den Austritt des reinen Lösungsmittels angezeigt ist.
